(19) Europäisches Patentamt / European Patent Office / Office européen des brevets

(11) **EP 4 258 224 A1**

(12) **EUROPEAN PATENT APPLICATION**

(43) Date of publication:
**11.10.2023 Bulletin 2023/41**

(21) Application number: **22305495.8**

(22) Date of filing: **08.04.2022**

(51) International Patent Classification (IPC):
*G06V 10/22* (2022.01)  *G06V 10/24* (2022.01)
*G06V 10/46* (2022.01)  *G06V 10/772* (2022.01)
*G06V 10/774* (2022.01)  *G06V 20/64* (2022.01)
*G06T 7/73* (2017.01)  *G06T 7/80* (2017.01)
*B25J 9/16* (2006.01)  *B25J 13/08* (2006.01)

(52) Cooperative Patent Classification (CPC):
**G06V 10/462; G06V 10/235; G06V 10/248;**
**G06V 10/772; G06V 10/774; G06V 20/64;**
B25J 9/1692; B25J 9/1697; B25J 13/081;
G06T 7/73; G06T 7/80

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
  **Toyota-shi, Aichi-ken 471-8571 (JP)**
• **Technische Universität München**
  **80333 München (DE)**

(72) Inventors:
• **GARATTONI, Lorenzo**
  **1140 Brussels (BE)**

• **MEIER, Sven**
  **1140 Brussels (BE)**
• **WANG, Pengyuan**
  **80333 München (DE)**
• **JUNG, Hyunjun**
  **80333 München (DE)**
• **BUSAM, Benjamin**
  **80333 München (DE)**
• **NAVAB, Nassir**
  **80333 München (DE)**

(74) Representative: **Cabinet Beau de Loménie**
  **158, rue de l'Université**
  **75340 Paris Cedex 07 (FR)**

(54) **A METHOD FOR PRODUCING A TRAINING DATASET OF OBJECT POSES**

(57) A method for producing a training dataset comprising at least one image of a scene and an associated pose annotation of at least one object (40) within the scene, the method comprising:
- providing an acquisition device and defining a reference frame relative to a fixed point;
- obtaining a digital model of the object (40);
- determining a position of key points of the object (40) by physical contact between the acquisition device and each key point;

- locating the key points on the digital model and deriving a pose estimation of the object (40);
- calibrating a pose of a camera (62) mounted to the acquisition device;
- acquiring an image of the scene with the camera (62), wherein the image includes the object (40);
- outputting the image and a corresponding relative pose of the object (40), wherein the corresponding relative pose is determined based on the pose of the camera (62) and the pose estimation of the object (40).

**FIG. 2**

EP 4 258 224 A1

**Description**

TECHNICAL FIELD

The present disclosure relates to the field of machine learning, especially to training of image recognition machine learning models. In particular, the present disclosure is directed to a method for producing a training dataset comprising an image of a scene and an associated pose of an object within the scene.

TECHNOLOGICAL BACKGROUND

Object pose estimation is crucial for applications such as robotics or augmented reality. New research fields are opening in these domains, but they need to be supported by well-designed and high-quality datasets.
Manually annotating the pose of an object in an image is difficult and extremely time-consuming. Therefore, most datasets rely on semi-manual processes for ground-truth annotation. However, photometrically challenging objects such as shiny, e.g. metallic, and transparent, e.g. glass, objects are very common in daily life and little work has been done to estimate their poses within practical accuracy, especially on a category-level. The difficulty arises from two aspects: first, it is difficult to annotate pose ground truth for photometrically challenging objects since no texture can be used to determine key points; second, commonly used depth sensors fail to return the correct depth information, as structured light and stereo method often fail to correctly interpret reflection and refraction artefacts. As a consequence, RGB-D methods do not work reliably with photometrically challenging objects.
Therefore, there is a need for a method for producing a training dataset which at least substantially remedy the above-mentioned drawbacks.

SUMMARY

In this respect, the present disclosure relates to a method for producing a training dataset comprising at least one image of a scene and an associated pose annotation of at least one object within the scene, the method comprising:

- providing an acquisition device and defining a reference frame relative to a point fixed with respect to the scene;
- obtaining a digital model of the at least one object;
- determining a position of a plurality of key points of the at least one object in the reference frame by physical contact between the acquisition device and each of the key points;
- locating the key points on the digital model and deriving a pose estimation of the object in the reference frame;
- calibrating a pose of a camera mounted to the acquisition device in the reference frame;
- acquiring at least one image of the scene with the camera, wherein the at least one image includes the at least one object;
- outputting the at least one image and a corresponding relative pose of the at least one object, wherein the corresponding relative pose is determined based on the pose of the camera in the reference frame and the pose estimation of the object in the reference frame.

As used in the description and the appended claims, the singular forms "a", "an", and "the" are intended to include the plural forms as well, unless the context clearly indicates otherwise. In the following, unless mentioned otherwise, "a", "an" and "the" element (e.g. image, object, camera, etc.) means "at least one" or "the at least one" or "each" element.
A training dataset is dataset able to be used for training a machine learning model, in particular a machine learning model configured to perform object recognition in images, e.g. category-level instance segmentation.
The pose annotation associated to an image is the annotation, in the image, of the pose of an object shown in the image. The pose may include the position (location) of an object and/or the attitude (rotation) of the object. Each of the position and the attitude may be represented by Q coordinates (e.g. Q=3 in three dimensions), such that the pose may include e.g. Q or 2Q coordinates. In the following, without any loss of generally, the example of a six-dimensional (6D) pose will be described.
The reference frame is a frame, the origin of which is the fixed point. All the poses may be expressed with respect to the reference frame, whatever the fixed point is, in order to make connections between the poses of the different components used in the method, e.g. the acquisition device, the object and the camera. In the following, the location of a point (respectively the pose of an object, or the like) in the reference frame is referred to as the absolute location (respectively absolute pose or the like).
All the poses may be expressed with respect to the reference frame either directly, i.e. by relating to the fixed point and the axes of the reference frame, or indirectly, i.e. by relating to another reference frame, the movement of which is known with respect to the reference frame.

The acquisition device is configured to carry out physical contact with the object and to carry at least one camera (hereinafter, the camera), although these configurations may not be present simultaneously.

The position and/or configuration (e.g. deformation state) of the acquisition device in the reference frame may be known at all times, e.g. thanks to a tracking device.

The object stands for any instance which it is desired to include in the dataset in order to train a machine learning model thereon. For instance, the object may include a manufactured object, a raw material, a plant, a person, etc. Preferably, the object is inanimate. In the scene, there may be one or several objects. The objects may belong to one or several classes. The objects may differ from one another in terms of photometrical properties, such as shininess or transparence.

A digital model of an object is an immaterial replication, on a computer system, of the object. The digital model may be obtained by on-the-spot acquisition or retrieval of previously stored data.

The key points are points of the object which can be located both on the object itself, e.g. by physical contact with the acquisition device, and on the digital model, e.g. by manual annotation. The key points may be chosen to be easily located; for instance, a key point may be chosen as textural (e.g. a decoration) or topological (e.g. a vertex) landmarks of the object.

The physical contact between the acquisition device and the object may be direct or indirect, e.g. through special tool mounted for that purpose on the acquisition device.

Locating the key points on the digital model may be carried out manually, while deriving a pose estimation of the object in the reference frame may be computer-implemented.

Thanks to the absolute positions of the key points and the location of the key points on the digital model, it is possible to match the digital model to the key points and to obtain a pose estimation for the rest of the digital model, hence for the entire object.

The camera pose calibration aims to determine the position and/or orientation of the camera, or at least of an acquisition points thereof, in the reference frame. As mentioned above, the camera may include one or more camera sensors. A plurality of cameras may be helpful if the camera modalities and/or resolutions differ from one another.

The camera is used to acquire at least one image of the scene. When the camera acquires a plurality of images of the scene and the scene includes a plurality of objects, some of the images may not show all of the objects: some images may show some objects, and other images may show other objects. Besides, occlusion between objects may occur differently between different images, as a consequence e.g. of a different viewpoint on the scene.

The method finally outputs the at least one image, acquired by the camera, and a pose annotation of the at least one object, associated to that image. The pose annotation comprises the relative pose of the object within the image.

Thanks to the object pose estimation derived from positions of key points determined by physical contact between the acquisition device and the object, highly accurate pose annotations can be obtained, even for photometrically challenging objects having e.g. reflective or transparent surfaces: indeed, the location of the key points is not obtained by a vision-based method but through physical contact, which is not affected by challenging photometrical properties of the objects. Therefore, the method enables to provide a high-quality training dataset.

Optionally, the acquisition device comprises a robot arm. The robot arm may be easily manipulated and facilitates acquisition. The robot arm may have a fixed robot base and a moving end effector.

Optionally, the acquiring at least one image of the scene with the camera comprises defining a trajectory for the robot arm, then making the robot arm carrying the camera travel along the trajectory and capturing the at least one image at given positions of the trajectory. In other words, the image is captured while the robot arm travels along the trajectory after the trajectory has been defined. Thus, the desired trajectory is followed with great accuracy and can provide a varied set of images.

In particular, the robot arm may be motorized, e.g. in order to be able to replay the trajectory on its own and with high reproducibility. Besides, the robot arm may have a gravity-compensated mode to facilitate manipulation thereof.

Optionally, the defining a trajectory comprises manually moving the robot arm while recording movements of the robot arm. Thus, the definition of the trajectory is simple and intuitive and the recorded movements can be easily replayed. As a consequence, the method is easy to carry out.

Optionally, the robot arm is stopped when the camera captures the image. This ensures little or no motion blur and increases the image quality. For instance, the robot arm may be stopped at several positions along the aforementioned trajectory.

Optionally, the camera is multimodal. Modalities refer to the dimensions in which a quantity is acquired by the camera, such as color (RGB), infrared, depth, etc. The image output in the training dataset may correspond to the captures modalities (e.g. color image, infrared image, depth image, etc.).

Optionally, the camera comprises a polarization modality. That is, the camera includes a polarization camera sensor. Polarization provides helpful information especially for photometrically challenging surfaces such as reflective, translucent or transparent surfaces, where the RGB information depends on the environment more than on the object itself, and depth sensors generally provide erroneous or invalid maps. Therefore, the polarization modality offers a robust alternative to train a machine learning model.

Optionally, the determining a position of a plurality of key points comprises, for each of the key points, touching the key point with a tip mounted to the acquisition device, and deriving the position of the key point in the reference frame based on a configuration of the acquisition device in the reference frame when the tip touches the key point. The tip enables to accurately locate the key point irrespective of how bulky the acquisition device is. When the tip touches the key point, the configuration of the acquisition device in the reference frame is recorded, and the position of the key point is derived therefrom. The tip may have a relatively large cross-section and a relatively thin cross-section closer to the touching end thereof. The tip may be tapered.

Optionally, the method further comprises calibrating a pose of the tip mounted to the acquisition device in the reference frame. That is, if need be, the pose of the tip is calibrated in the reference frame in order to obtain the geometrical transformation between the acquisition device, e.g. the end effector, and the tip. Therefore, the key points can be more accurately located.

Optionally, the tip calibration may be carried out for a plurality of configurations of the acquisition device, while the tip touching a same fixed point of the scene. The fixed point may be any fixed point of the scene. Accuracy is thus further increased.

Optionally, the obtaining a digital model comprises acquiring the digital model with a scanner, such as a laser scanner. Thus, the digital model is highly accurate.

Optionally, the method further comprises spraying an opaque coating onto the at least one object before acquiring the digital model of the at least one object with the scanner. Thus, the scanner can appropriately acquire the digital model even though the object has a transparent or translucent surface. Spraying the opaque coating is simple and does not increase the method costs significantly.

Optionally, the acquiring the at least one image is carried out after removal of the opaque coating. The opaque coating may be removed in any manner, such as manual or machine-assisted cleaning, or even self-removal if the opaque coating is a self-vanishing coating. Acquiring the image after removal of the opaque coating enables to camera to acquire the actual image to which machine learning models will be confronted, while the opaque coating is only used to help acquiring the digital model.

Optionally, the deriving a pose estimation of the object in the reference frame comprises determining a rough pose estimation based on the key points and determining the pose estimation by refining the rough pose estimation through an Iterative Closest Point algorithm.

In other words, in these embodiments, the pose estimation is the refinement of a first rough pose estimation, the refinement being obtained through an Iterative Closest Point (ICP) algorithm. ICP algorithms are known per se in the art, see e.g. Paul J Besl and Neil D McKay. Method for registration of 3-d shapes. In Sensor fusion IV: control paradigms and data structures, volume 1611, pages 586-606. International Society for Optics and Photonics, 1992. The ICP algorithm enables to align the dense mesh points of the object digital model and the measured sparse surface points (i.e. the key points) as a refinement step for the initial rough object pose estimations.

The ICP algorithm may be computer-implemented.

Optionally, the associated pose annotation further comprises an instance-level and/or a category-level label of the at least one object. In these embodiments, each object is labelled with an instance label, identifying it individually (e.g. spoon #2), and/or with a category label, identifying a category to which the object belongs (e.g. cutlery). Instance-level pose methods generally support a limited number of objects, while category-level pose estimation scales better to the needs of real operating environments.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a diagram illustrating a method for producing a training dataset according to an embodiment;
- Fig. 2 illustrates steps of the method of Fig. 1;
- Fig. 3 illustrates the improvement obtained through an ICP algorithm, according to an embodiment;
- Fig. 4 illustrates camera calibration according to an embodiment.

DETAILED DESCRIPTION OF EMBODIMENTS

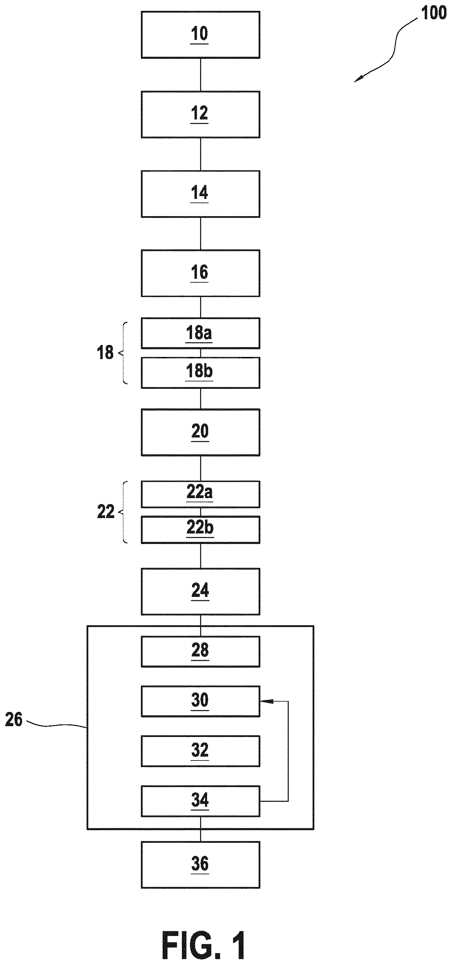

An embodiment of a method 100 for producing a training dataset is described with reference to figures 1 to 4. A scene is provided with one or more objects 40, and the purpose of the method 100 is to output a training dataset comprising at least one image of the scene and an associated pose annotation of at least one object within the scene.

In this embodiment, the objects are daily life objects, but any objects are envisaged.

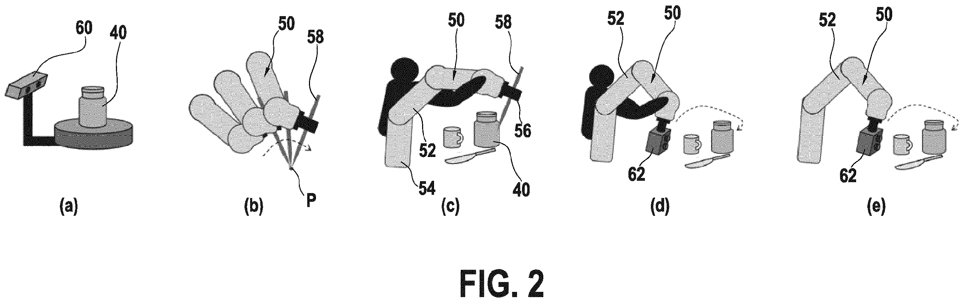

The method 100 comprises a step 10 of providing an acquisition device and defining a reference frame relative to a point fixed with respect to the scene. In this embodiment, the acquisition device comprises a robot arm 50, illustrated e.g. in Fig. 2. In the following, without loss of generality, the robot arm 50 will be used as an example for the acquisition device.

The robot arm 50 may have a plurality of interconnected segments 52, which may move with respect to one another about at least one axis. Robots arms per se are known in the art, such that the robot arm 50 will not be described in details herein. For instance, the robot arm 50 may be a KUKA LBR iiwa 7 R800 (KUKA Roboter GmbH, Augsburg, Germany) 7 DoF robotic arm, which guarantees a positional reproducibility of ±0.1 mm. More generally, the robot arm 50 may have a gravity-compensation mode. The robot arm 50 may be motorized.

The robot arm 50 may have a base 54 (also referred to as the robot base 54), e.g. a fixed base, namely a base which is fixed with respect to the scene. The end of the robot arm 50 opposite the base 54 may be an end-effector 56. The end-effector 56 may be configured to hold tools such as mounts, acquisition devices and the like.

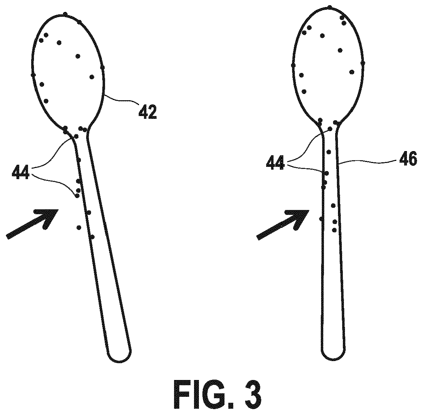

In this example, the origin of the reference frame is a point of the base 54 (see Fig. 3(a) for instance), but any point fixed with respect to the scene may be chosen. The axes and units of the reference frame may be any axes suitable to fully locate a point in the reference frame.

Optionally, before obtaining a digital model of the at least one object of the scene, the method 100 may comprise a step 12 of spraying, or otherwise applying, an opaque coating onto the at least one object 40, in order to make the object 40 temporarily opaque for model acquisition. The opaque coating may be e.g. AESUB Blue, Aesub, Recklinghausen, Germany. This is an example of a self-vanishing coating: the coating sublimes after a predetermined duration, in this case approximately four hours.

The opaque coating may not be applied to all objects, but only to objects or object portions which are photometrically challenging for digital model acquisition, such as reflective and transparent object portions, e.g. cutlery or glassware.

In step 14, a digital model of the object 40 is obtained, e.g. with a scanner 60, as illustrated in Fig. 2(a). For instance, the scanner 60 may be an EinScan-SP 3D Scanner (SHINING 3D Tech. Co., Ltd., Hangzhou, China). More generally, the scanner may be a structured light stereo system with a single shot accuracy of 0.05 mm (millimeter) or less in a scanning volume of $1200 \times 1200 \times 1200$ mm$^3$.

Instead of acquiring the digital model during the method 100, the digital model may be acquired beforehand, and in step 14 of the method 100, the previously-acquired digital model may just be obtained, e.g. retrieved from a memory. In this case, the opaque coating spraying may be performed when appropriate, and not necessarily within the method 100.

The digital model obtained in step 14 may be assigned a label, e.g. an instance-level and/or a category-level label of the at least one object. In this embodiment, eight common categories are selected for the category-level 6D object pose dataset: bottle, box, can, cup, remote control, teapot, cutlery, glassware. Of course, these categories could be generalized or sub-divided, and other categories could be chosen. Some categories like bottles are glassware can include transparent or translucent material, while other categories such as cans or cutlery can have reflective surfaces.

After acquisition of the digital model, the opaque coating is removed from the object 40 if necessary, in particular if the coating does not self-vanish. In any case, the opaque coating should not be present any more when image acquisition, to be described later on, is carried out.

In order to locate key points of the objects 40, a tip 58 may be mounted to the robot arm 50. In this embodiment, the tip 58 is a rigid, pointy, metallic tip to obtain the coordinate position of selected points on the object 40, namely the key points. The tip 58 may be mounted to the robot arm 50 by a rig attached to the robot's end-effector 56, the rig holding the tip rigidly.

Thus, the method 100 may comprise a tip calibration step 16 in order to ensure accuracy of the system. For instance, the tip point is placed in a fixed position P, while only the robot end-effector position is changed, as illustrated in Fig. 2(b). The fixed position P may be identified by a mark on a fixed surface, such a tape on a flat surface. Data from N such tip positions with corresponding end-effector poses $_iT_e^b$ are collected, which end-effector poses contain rotation $_iR_e^b$ and translation $_it_e^b$, and the final translation $t_t^e$ of the end-effector can be calculated as follows:

$$t_t^e = \begin{bmatrix} {}_1R_e^b - {}_2R_e^b \\ {}_2R_e^b - {}_3R_e^b \\ \vdots \\ {}_NR_e^b - {}_1R_e^b \end{bmatrix}^\dagger \cdot \begin{bmatrix} {}_1t_e^b - {}_2t_e^b \\ {}_2t_e^b - {}_3t_e^b \\ \vdots \\ {}_Nt_e^b - {}_1t_e^b \end{bmatrix}$$

where †, on the first term, denotes the pseudo-inverse. The tip calibration may be evaluated by calculating the variance of each tip location at the fixed position P, which forms a pivot point. In the above-described setup, the variance of the tip location is 0.057mm.

The tip 58 needs not be touch-sensitive, since the location of the tip 58 can be determined as a function of the end effector's pose, or more generally as a function of the robot arm's configuration.

As indicated above, the method 100 further comprises a step 18 of determining a position of a plurality of key points of the at least one object in the reference frame by physical contact between the acquisition device and each of the key points. Specifically, for each of the key points, steps 18a and 18b are carried out. Step 18a comprises touching the key point with the tip mounted to the acquisition device. For instance, for the tip 58 attached to the robot's end-effector 56, the configuration of the robot arm 50 is recorded when the tip 58 touches the key point. The robot arm 50, end-effector 56 and/or tip 58 may be hand-guided while the robot arm 50 is in gravity compensation mode, as illustrated in Fig. 2(c).

Then, at step 18b, the absolute position of the key point, i.e. the position of the key point in the reference frame, is derived based on the recorded configuration of the robot arm 50. That is, knowing the pose of the end-effector 56 with respect to the base 54, and the above final translation $t_t^e$, the absolute position of the key point may be determined.

Optionally, not only the key points but also one or more surface points of the object 40 are located in this manner.

At step 20, which may take place before, at the same time or after step 18, the key points are located on the digital model. For instance, the key points are manually picked on the object model's mesh, or any other form of digital model. The other surface points need not be manually picked on the digital model.

At step 22, the method 100 proceeds with deriving a pose estimation of the object 40 in the reference frame. Step 22 may be computer-implemented. In an embodiment, step 22 first comprises step 22a in which the absolute locations of the respective key points and their annotation on the digital model are used to determine a rough pose estimation of the object, e.g. an estimation of the pose of the digital model in the reference frame.

Figure 3(a) shows such a rough pose estimation 42 of the digital model overlaid with the measured surface points 44, with the example of a spoon, the bottom of which is occluded (hence no points can be acquired there). As can be seen, although the surface points 44 and the rough pose estimation 42 globally concur, errors remain, as shown by the arrow in Fig. 3(a). In order to improve the pose estimation, step 22 further comprises a step 22b of determining the pose estimation by refining the rough pose estimation obtained at step 22a, e.g. through an Iterative Closest Point (ICP) algorithm. That is, ICP is applied to align the dense mesh points of the digital model and the measured sparse surface points 44 (and not only the key points) in order to refine the rough pose estimation 42 and obtain a more accurate pose estimation 46. Figure 3b shows the pose estimation 46 of Fig. 3(a) after applying the ICP, and illustrates that the refined pose matches with the surface points properly, as shown by the arrow.

Quantitative evaluation shows that that ICP improves the annotation in real life scenario particularly on textureless objects, where it is difficult to find exact correspondence from the mesh.

Thus, the ICP leverages the measured surface points, even if they are not located on the digital model, to refine the rough pose estimation 42. Other algorithms could be used to this end.

At this stage, the scene has been somewhat digitalized, so that ground-truth of the scene is known: specifically, the respective pose estimations of the objects in the reference frame have been determined. The remaining steps of the method 100 aim to connect this ground-truth data to images of the scene, in order to prepare the dataset.

The method 100 comprises a step 24 of calibrating a pose of a camera 62 mounted to the acquisition device in the reference frame. The camera 62 may be a multimodal camera, as discussed above. For example, the camera 62 may comprise a polarization camera such as a Phoenix 5.0 MP Polarization camera (IMX264MZR/MYR) with Sony IMX264MYR CMOS (Color) Polarsens (i.e. PHX050S1-QC) (LUCID Vision Labs, Inc., Richmond B.C., Canada) with a Universe Compact lens with C-Mount 5MP 2/3" 6mm f/2.0 (Universe, New York, USA). As depth camera, the Time-of-Flight (ToF) sensor Intel®RealSense™LiDAR L515 is used, which acquires depth images at a resolution of 1024×768 pixels in an operating range between 25 cm and 9 m with a field-of-view of 70°x 55°and an accuracy of 5 ± 2.5 mm at 1 m distance up to 14 ± 15.5 mm at 9 m distance. Thus, multimodal sensor data are acquired by the camera 62. In this example, the polarization camera and the depth camera both also provide RGB images, but if desired or necessary, a separate RGB camera may be mounted to the acquisition device.

Usual camera calibration requires detection of a calibration marker from the camera in various positions to obtain an accurate calibration result. The transformation from camera to end-effector is difficult to estimate as the calibration marker transformation to robot base is unknown and both have to be jointly estimated. In the context of the method 100, however, the marker position can be accurately measured with the tip 58.

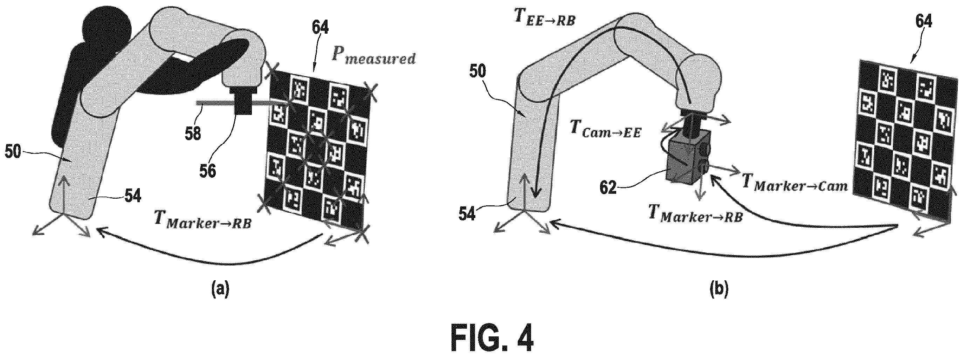

Figure 4 shows an example of a camera calibration step 24. First, as shown in Fig. 4(a), a calibration marker (hereinafter, the marker) 64 such as a marker board (e.g. a ChArUco board, see Gwon Hwan An, Siyeong Lee, Min-Woo Seo, Kugjin Yun, Won-Sik Cheong, and Suk-Ju Kang. Charuco board-based omnidirectional camera calibration method. Electronics, 7(12):421, 2018) is provided and the position $P_{measured}$ of a selected number of points (here 12 points) is acquired by the tip 58, in the same manner as the above mentioned key points. This enables to calculate $T_{Marker \rightarrow RB}$ (Fig. 4a), namely the pose of the marker 64 in the reference frame (here linked to the base 54, referred to as the robot base RB). From the pose of the marker 64 in the reference frame, the $T_{handeye}$, namely the camera pose with respect to the end-effector, also denoted as $T_{cam \rightarrow EE}$, is calculated as follows:

$$T_{handeye} = T_{cam \rightarrow EE} = T_{EE \rightarrow RB}^{-1} \cdot T_{Marker \rightarrow RB} \cdot T_{Marker \rightarrow cam}^{-1}$$

where $T_{EE \rightarrow RB}$ is the pose of the end-effector with respect to the robot base and is given as a characteristic of the robot arm 50, $T_{Marker \rightarrow RB}$ is obtained as detailed above and $T_{Marker \rightarrow cam}$ is the pose of the marker with respect to the camera frame, which can be detected by vision algorithm known per se, applied to at least one image of the marker 64 taken by the camera 62 as shown in Fig. 4(b). The lower the resolution of the camera 62, the more images will be necessary to determine $T_{Marker \rightarrow cam}$ accurately.

The method 100 further comprises a step 26 of acquiring at least one image of the scene with the camera 62, wherein the at least one image includes the at least one object 40. If a single image is to be acquired, step 26 can be carried out in a straightforward way, merely positioning the camera 62 at a desired location and acquiring the image from that location.

However, if a plurality of images is desired, which should often be the case when preparing a training dataset (e.g. 400-500 images per scene), repeating this single acquisition may be time-consuming. Instead, step 26 may be carried out at least partly as follows.

Step 26 may comprise a sub-step 28 of defining a trajectory for the robot arm 50. For instance, the trajectory may be defined numerically with the help of software, or may be defined, as illustrated in Fig. 2(d), by manually moving the robot arm 50 while recording movements of the robot arm 50. In an example, the trajectory of all joints of the robot arm is recorded by manually moving the end-effector 56 while the robot arm 50 is in gravity-compensated mode.

Then, the robot arm 50, which carries the camera 62, is made to travel along the defined trajectory (sub-step 30), as shown in Fig. 2(e). For instance, the actuation system of the robot arm 50 replays the recorded joint trajectory. The camera 62, which is mounted to the robot arm 50, can thus capture at least one image of the scene at given positions of the trajectory. Optionally, the robot arm 50 is stopped when the camera captures an image, to avoid motion blur. For instance, the robot arm may be stopped every 5-7 joint positions to capture the image and record the robot arm configuration (i.e. the end effector pose in the reference frame).

Thus, with reference to Fig. 1, the robot arm 50 is stopped along the trajectory (sub-step 32), at which point the camera 62 captures an image (sub-step 34). Then, the robot arm 50 resumes moving along the trajectory (back to sub-step 30), until the next stopping position, and so on. Therefore, acquisition of the images is carried out in a simple and relatively fast manner.

When the trajectory has been fully traveled by the robot arm 50 or when no more image acquisition positions are planned, the method 100 proceeds to step 36, in which the method 100 outputs the at least one image (acquired at step 26) and a corresponding relative pose of the at least one object 40, wherein the corresponding relative pose is determined based on the pose of the camera 62 in the reference frame (obtained by the calibration of step 24) and the pose estimation of the object in the reference frame (obtained by in step 22). In short, the relative pose is the object pose in camera coordinates.

Throughout the method 100, the reference frame may be used directly or indirectly: in other words, the corresponding relative pose may be determined based on the pose of the camera 62 and the pose estimation of the object with respect to any reference frame, even a non-fixed reference frame (such as with respect to the end effector 56), provided that this reference frame has a known pose with respect to the reference frame associated to the fixed point of the scene.

Annotation quality of the resulting dataset may be evaluated by running simulated data acquisition with two measured statistics, namely ICP error and hand-eye calibration error. For both RGB-D (red, green, blue/depth) and polarization camera, setup from a scene is used including the objects and the trajectories. The acquisition is simulated twice, with and without the aforementioned error. In the end, RMSE error is calculated pointwise in millimeters between the acquisitions. The error per object and per each frame in the trajectories was averaged. RMSE error for RGB-D camera is 0.84 mm and for polarization camera is 0.76 mm. Both significantly outperform state-of-the-art methods, for which the RMSE error is more than one order of magnitude higher.

Although the present disclosure refers to specific exemplary embodiments, modifications may be provided to these examples without departing from the general scope of the invention as defined by the claims. For instance, although the steps of the method 100 have been described in a certain order, any order compatible with the technical requirements of the method may be used. For instance, the camera calibration step 24 may be carried out at any point before the output step 36, even after the image capture step 34. More generally, the order of the steps is limited only by the technical relationships between the different steps, and any technically realistic order is encompassed herein. Besides, individual characteristics of the different illustrated/mentioned embodiments may be combined in additional embodiments. Therefore, the description and the drawings should be considered in an illustrative rather than in a restrictive sense.

**Claims**

1. A method (100) for producing a training dataset comprising at least one image of a scene and an associated pose annotation of at least one object (40) within the scene, the method comprising:

   - providing (10) an acquisition device and defining a reference frame relative to a point fixed with respect to the scene;
   - obtaining (14) a digital model of the at least one object (40);
   - determining (18) a position of a plurality of key points of the at least one object (40) in the reference frame by physical contact between the acquisition device and each of the key points;
   - locating (20) the key points on the digital model and deriving (22) a pose estimation (46) of the object (40) in the reference frame;
   - calibrating (24) a pose of a camera (62) mounted to the acquisition device in the reference frame;
   - acquiring (26) at least one image of the scene with the camera (62), wherein the at least one image includes the at least one object (40);
   - outputting (36) the at least one image and a corresponding relative pose of the at least one object (40), wherein the corresponding relative pose is determined based on the pose of the camera (62) in the reference frame and the pose estimation of the object (40) in the reference frame.

2. The method of claim 1, wherein the acquisition device comprises a robot arm (50).

3. The method of claim 2, wherein the acquiring (26) at least one image of the scene with the camera (62) comprises defining (28) a trajectory for the robot arm (50), then making the robot arm (50) carrying the camera (62) travel (30) along the trajectory and capturing (34) the at least one image at given positions of the trajectory.

4. The method of claim 3, wherein the defining (28) a trajectory comprises manually moving the robot arm (50) while recording movements of the robot arm (50).

5. The method of claim 3 or 4, wherein the robot arm (50) is stopped (32) when the camera (62) captures the image.

6. The method of any one of claims 1 to 5, wherein the camera (62) is multimodal, and optionally wherein the camera (62) comprises a polarization modality.

7. The method of any one of claims 1 to 6, wherein the determining (18) a position of a plurality of key points comprises, for each of the key points, touching (18a) the key point with a tip (58) mounted to the acquisition device, and deriving (18b) the position of the key point in the reference frame based on a configuration of the acquisition device in the reference frame when the tip (58) touches the key point.

8. The method of claim 7, further comprising calibrating (16) a pose of the tip (58) mounted to the acquisition device in the reference frame.

9. The method of any one of claims 1 to 8, wherein the obtaining (14) a digital model comprises acquiring the digital model with a scanner (60).

10. The method of claim 9, further comprising spraying (12) an opaque coating onto the at least one object (40) before acquiring the digital model of the at least one object with the scanner (60).

11. The method of claim 10, wherein the acquiring the at least one image is carried out after removal of the opaque coating.

12. The method of any one of claims 1 to 11, wherein the deriving (22) a pose estimation of the object in the reference frame comprises determining (22a) a rough pose estimation (42) based on the key points and determining (22b) the pose estimation (46) by refining the rough pose estimation (42) through an Iterative Closest Point algorithm.

13. The method of any one of claims 1 to 12, wherein the associated pose annotation further comprises an instance-level and/or a category-level label of the at least one object (40).

FIG. 1

FIG. 2

FIG. 3

FIG. 4

Europäisches
Patentamt

European
Patent Office

Office européen
des brevets

# EUROPEAN SEARCH REPORT

**Application Number**

EP 22 30 5495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | PENGYUAN WANG ET AL: "PhoCaL: A Multi-Modal Dataset for Category-Level Object Pose Estimation with Photometrically Challenging Objects", ARXIV.ORG, CORNELL UNIVERSITY LIBRARY, 201 OLIN LIBRARY CORNELL UNIVERSITY ITHACA, NY 14853, 18 May 2022 (2022-05-18), XP091227389, * the whole document * | 1-13 | INV. G06V10/22 G06V10/24 G06V10/46 G06V10/772 G06V10/774 G06V20/64 G06T7/73 G06T7/80 |
| X | XINGYU LIU ET AL: "StereOBJ-1M: Large-scale Stereo Image Dataset for 6D Object Pose Estimation", ARXIV.ORG, CORNELL UNIVERSITY LIBRARY, 201 OLIN LIBRARY CORNELL UNIVERSITY ITHACA, NY 14853, 14 March 2022 (2022-03-14), XP091171046, * the whole document * | 1-13 | ADD. B25J9/16 B25J13/08 |
| X | TOMAS HODAN ET AL: "T-LESS: An RGB-D Dataset for 6D Pose Estimation of Texture-less Objects", ARXIV.ORG, CORNELL UNIVERSITY LIBRARY, 201 OLIN LIBRARY CORNELL UNIVERSITY ITHACA, NY 14853, 19 January 2017 (2017-01-19), XP080750207, DOI: 10.1109/WACV.2017.103 * the whole document * | 1-13 | |
| X | HAOPING XU ET AL: "Seeing Glass: Joint Point Cloud and Depth Completion for Transparent Objects", ARXIV.ORG, CORNELL UNIVERSITY LIBRARY, 201 OLIN LIBRARY CORNELL UNIVERSITY ITHACA, NY 14853, 30 September 2021 (2021-09-30), XP091062504, * the whole document * | 1-13 | |

**TECHNICAL FIELDS SEARCHED (IPC)**

G06V
B25J
G06T

-/--

The present search report has been drawn up for all claims

| Place of search | Date of completion of the search | Examiner |
|---|---|---|
| The Hague | 20 September 2022 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 30 5495

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XINGYU LIU ET AL: "KeyPose: Multi-View 3D Labeling and Keypoint Estimation for Transparent Objects", ARXIV.ORG, CORNELL UNIVERSITY LIBRARY, 201 OLIN LIBRARY CORNELL UNIVERSITY ITHACA, NY 14853, 18 May 2020 (2020-05-18), XP081666308, * the whole document * ----- | 1-13 | |

TECHNICAL FIELDS
SEARCHED      (IPC)

The present search report has been drawn up for all claims

| Place of search | Date of completion of the search | Examiner |
|---|---|---|
| The Hague | 20 September 2022 | Granger, Bruno |

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PAUL J BESL ; NEIL D MCKAY.** Method for registration of 3-d shapes. In Sensor fusion IV: control paradigms and data structures. International Society for Optics and Photonics, 1992, vol. 1611, 586-606

- **GWON HWAN AN ; SIYEONG LEE ; MIN-WOO SEO ; KUGJIN YUN ; WON-SIK CHEONG ; SUK-JU KANG.** Charuco board-based omnidirectional camera calibration method. *Electronics,* 2018, vol. 7 (12), 421